# EUROPÄISCHE PATENTSCHRIFT

(11) **EP 3 686 094 B1**
(45) Veröffentlichungstag und Bekanntmachung des Hinweises auf die Patenterteilung: **26.10.2022**
(21) Anmeldenummer: 20153522.6
(22) Anmeldetag: 24.01.2020
(51) Int. Cl.: B62D 51/02

(54) **FLURFÖRDERZEUG MIT EINER FAHRERSTANDPLATTFORM**
INDUSTRIAL TRUCK WITH A DRIVER'S CAB
CHARIOT DE MANUTENTION DOTÉ D'UNE PLATEFORME PORTEUSE POUR CONDUCTEUR

(30) Priorität: 25.01.2019 DE 102019101869
(43) Veröffentlichungstag der Anmeldung: 29.07.2020
(73) Patentinhaber: Jungheinrich Aktiengesellschaft, 22047 Hamburg (DE)
(72) Erfinder: LOHMANN, Helmut, 27404 Gyhum (DE); Schüler, Michael, 23923 Schönberg (DE); Brunckhorst, Holger, 22844 Norderstedt (DE)
(74) Vertreter: Hauck Patentanwaltspartnerschaft mbB

(56) Entgegenhaltungen:
- EP-A1- 2 518 008
- EP-A2- 1 977 989
- WO-A2-2006/118925
- US-A- 5 890 562
- US-A1- 2008 202 857

## Beschreibung

Die vorliegende Erfindung betrifft ein Flurförderzeug mit einer Fahrerstandplattform. Für die Fahrerstandplattform ist ein Einstieg vorgesehen, der von zwei Seitenwänden begrenzt ist.

Die Gestaltung einer Fahrerstandplattform und insbesondere ihrer seitlichen Begrenzungen ist unter vielen verschiedenen Gesichtspunkten Gegenstand von technischen Weiterentwicklungen. Eine wichtige Funktion bei der Gestaltung einer Fahrerstandplattform und ihrer umgebenden Begrenzung besteht in einer Abstützung des Fahrers. Durch die Abstützung soll ein stehender Fahrer beispielsweise bei längeren Fahrten oder auch bei Kurvenfahrten gestützt werden. Der Fahrer kann sich anlehnen und in dieser Position das Fahrzeug steuern. Bei Flurförderzeugen mit einer Fahrerstandplattform gibt es verschiedene mögliche Standpositionen, die für den Fahrer von Interesse sind. Einerseits ist bei einer Fahrt vorwärts in Richtung des Lastteils eine frontale Stellung mit Blick in Fahrzeuglängsrichtung von Interesse. Andererseits ist bei einer Fahrt in die andere Richtung mit aufgenommener Last ein Blick von der Fahrerstandplattform und dem Lastteil fort von Interesse. Damit der stehende Fahrer in einer Standposition abgestützt wird, ist eine Fläche in der Seitenwand für die Fahrerstandplattform vorgesehen, die beispielsweise gepolstert ist und für eine Abstützung entsprechend an die Körperkontur angepasst ist. Auch ist es bekannt, einen Fahrer in seiner Standposition beispielsweise durch gepolsterte Vorsprünge abzustützen.

Ferner ist aus dem Stand der Technik ein Fahrzeug mit einer Seitenwand bekannt, die in einen halbrunden Abschnitt übergeht und für eine Bedienperson eine um 45° gegenüber einer Fahrzeuglängsachse gedrehte Standposition anbietet. Der gerade Abschnitt geht in den halbrunden Abschnitt über, so dass eine in diesem halbrunden Abschnitt stehende Bedienperson die Umgebung des Fahrzeugs aus seinem Diagonalstand überblicken und auch mit leichter Körperdrehung die Umgebung des Fahrzeugs in Lastrichtung als auch von der Last fort überblicken kann, wobei eine Abstützung der Bedienperson in dem Diagonalstand nicht vorgesehen ist.

Aus WO 2006/118925 A2 ist ein Flurförderzeug mit einer Fahrerstandplattform bekannt. Die Fahrerstandplattform besitzt einen Einstieg und seitlich zum Einstieg vorgesehene Bedienelemente. Den Bedienelementen gegenüber ist ein Abstützmittel für einen Fahrer im Querstand vorgesehen.

Aus EP 2 518 008 A1 ist ein Flurförderzeug mit einem Fahrersitz bekannt. Der Fahrersitz ist seitlich zu einem Einstieg vorgesehen und besitzt eine Anlehnfläche für eine auf der Bodenplattform stehende Bedienperson. Bedienelemente sind als Armlehnen ausgebildet.

Aus US 5,890,562 ist ein Flurförderzeug bekannt, das einen Fahrerstandplatz besitzt. Eine Bedienkonsole kann in unterschiedlichen Positionen in dem Fahrerstandplatz angebracht werden und ist so von der Bedienperson montierbar.

Der Erfindung liegt die Aufgabe zugrunde, ein Flurförderzeug bereitzustellen, das mit einfachen Mitteln einen ergonomisch geeigneten Standplatz für den Fahrer bereitstellt.

Erfindungsgemäß wird die Aufgabe durch ein Flurförderzeug mit den Merkmalen aus Anspruch 1 gelöst. Vorteilhafte Ausgestaltungen bilden die Gegenstände der Unteransprüche.

Das erfindungsgemäße Flurförderzeug ist mit einer Fahrerstandplattform ausgestattet. Die Fahrerstandplattform wird seitlich von mindestens zwei einen Einstieg bildenden Seitenwänden begrenzt. Ferner ist eine Bedieneinheit an einer Seite der Fahrerstandplattform angebracht und für eine Bedienung durch eine auf der Fahrerstandplattform stehende Person ausgerichtet. Bevorzugt handelt es um die dem Einstieg gegenüberliegende Seite, in der die Bedieneinheit angebracht ist. Eine der mindestens zwei Seitenwände stellt ein Abstützmittel für die Person in einem Querstand bereit. Querstand orientiert sich hierbei an der Fahrzeuglängsrichtung, wobei bei einem Querstand die durch Hüfte oder Schultern aufgespannte Frontalebene ungefähr parallel zur Fahrzeuglängsrichtung steht. In dem Querstand stützt die Bedienperson sich mit ihrer Rückseite dorsal an dem Abstützmittel der Seitenwand ab. Erfindungsgemäß ist mindestens eine der Seitenwände mit einem Rückenabschnitt versehen. Der Rückenabschnitt stellt ein weiteres Abstützmittel bereit, das für einen schrägen Frontstand vorgesehen ist. Beiden Abstützmitteln kann eine Ebene zugeordnet werden, die der Frontalebene einer sich an dem Abstützmittel abstützenden Person entspricht. Die Orientierung der Abstützmittel in der Fahrerstandplattform erfolgt erfindungsgemäß so, dass das die Abstützmittel bzw. deren Ebenen einen Winkel derart einschließen, dass der schräge Frontstand und der Querstand eigene Abstützpositionen bilden. Bei den eigenen Abstützposition besitzt die Person, die das jeweilige Abstützmittel benutzt eine räumlich genau definierte Position, wobei es zwei Positionen gibt, die voneinander verschieden sind. Hierbei sind schräger Frontstand und Querstand für die Bedienperson unterschiedliche Standorientierungen, die jeweils ein eigenes ausgebildetes Abstützmittel besitzen. Ein etwaig vorgesehener Übergang zwischen dem Abstützmittel der Seitenwand und dem des Rückenabschnitts kann in abgerundeter Form erfolgen, wobei der Übergang aber nicht so stark abgerundet ist, dass in dem Übergangsbereich durch die Abrundung eine weitere Abstützposition entsteht oder die beiden Abstützmittel in ein gemeinsames Abstützmittel übergehen. Vielmehr ist es so, dass bei der erfindungsgemäßen Lösung der Rückenabschnitt und mindestens eine der Seitenwände eigene Abstützmittel für eigene Abstützpositionen bilden, die jeweils eine eigene Orientierung der Bedienperson abstützen. Der besondere ergonomische Vorteil des vorliegenden Fahrzeugs besteht darin, dass Seitenwand und Rückenabschnitt insgesamt zwei unterschiedliche Abstützpositionen schaffen und damit eine individuelle Positionierung des Fahrers auf der Fahrerstandplattform unterstützen. Erfindungsgemäß ist dem Abstützmittel des Rückenabschnitts und dem Abstützmittel der Seitenwand jeweils eine Ebene zugeordnet, die im Wesentlichen einer Frontalebene einer an dem Abstützmittel sich abstützenden Person entspricht. Die Ebene kann auch einer Oberfläche des Abstützmittels entsprechen, wobei hier im Wesentlichen abgerundete Formen vorgesehen sind. Die Ebene des Abstützmittels an der Seitenwand, die für den Querstand vorgesehen ist, ist unter einem spitzen Winkel zu der Fahrzeuglängsrichtung orientiert. Dies bedeutet, dass auch bei einem Querstand die Person mit ihrer Frontalebene nicht vollständig parallel zur Fahrzeuglängsrichtung steht, sondern die Frontalebene unter einem spitzen Winkel gegenüber der Fahrzeuglängsrichtung geneigt ist. Für den spitzen Winkel hat sich ein Winkel von höchstens 20°, bevorzugt von maximal 12° als besonders vorteilhaft herausgestellt.

In einer bevorzugten Ausgestaltung besitzen beide Seitenwände Abstützmittel für einen Querstand. Die Abstützmittel und deren Ebenen sind relativ zueinander und relativ zu der Fahrzeuglängsrichtung so orientiert, dass ihr Abstand sich vom Einstieg hin zu dem Bedienelement vergrößert. Bezogen auf die Geometrie des Flurförderzeugs bedeutet dies, dass die sich mit dem Rücken an einer der beiden Seitenwände abstützende Bedienperson somit in Richtung Lastteil blickt.

In einer bevorzugten Weiterbildung weist das Abstützmittel für den schrägen Frontstand eine Ebene auf, die einen stumpfen Winkel mit der Fahrzeuglängsrichtung einschließt. Der Schnitt der Ebene mit der Fahrzeuglängsrichtung erzeugt insgesamt vier Winkel, wobei der stumpfe Winkel im mathematischen Drehsinn als erster auftritt. Das Abstützmittel für den schrägen Frontstand stützt die Bedienperson in einer Position ab, in der diese überwiegend in Richtung zu dem Lastteil schaut, die Sagittalachse aber mit der Fahrzeuglängsachse einen Winkel einschließt. Zugleich ist es aber keine vollständige Frontalstellung, in der die Sagittalachse mit der Fahrzeuglängsachse zusammenfällt. Von besonderem Interesse ist auch die relative Orientierung der Ebenen für den schrägen Frontstand und den Querstand. Je nach Ausgestaltung kann hier ein spitzer Winkel zwischen den beiden Ebenen vorgesehen sein. Es gibt aber auch die Ausgestaltung, in der diese beide Ebenen einen Winkel von 90° +/- 20° oder bevorzugt von 90° +/- 10° einschließen. Während es bei der Orientierung der Ebene für den schrägen Frontstand in Bezug auf die Fahrzeuglängsachse um eine absolute Orientierung der Stellung im Fahrzeug geht, erfolgt bei der Bestimmung des Winkelbereiches zwischen schrägem Frontstand und dem Querstand eine Orientierung der Ebenen relativ zueinander. Bei dieser relativen Orientierung zueinander liegt natürlich ein Winkel im Bereich um die 90° vor, da die Standposition zwischen einem schrägen Frontstand und dem Querstand ins Verhältnis zueinander gesetzt werden. Bei der relativen Orientierung zueinander richtet sich dann die absolute Orientierung beispielsweise nach dem Winkel, den die Ebene für den Querstand mit der Fahrzeuglängsrichtung einschließt.

In einer weiter bevorzugten Ausgestaltung ist an einer der Seitenwände ein Handgriff angebracht. Der Handgriff erlaubt es einer Bedienperson, sich im Querstand mit einer freien Hand festzuhalten und mit der anderen Hand das Bedienelement zu ergreifen. Durch das Festhalten an der gegenüberliegenden Seite bekommt die Bedienperson einen stabilen Stand, der ihr auch ein zuverlässiges Steuern des Fahrzeugs erlaubt. Zudem erlaubt das Festhalten auch eine sichere Bewegung des Kopfs und des Oberkörpers, um hier das Umfeld zu dem Fahrzeug und zu der Fahrstrecke zu beobachten.

Es hat sich herausgestellt, dass die Fläche des Abstützmittels für den schrägen Frontstand kleiner als die Fläche des Abstützmittels für den Querstand ausgebildet sein kann. Das Abstützmittel für den schrägen Frontstand ist dabei ausreichend groß ausgebildet, um eine durchschnittlich große Bedienperson im schrägen Frontstand in seinem Rückenbereich abzustützen. Bevorzugt erfolgt die Abstützung im Bereich des Rückens, insbesondere im Lendenbereich, wodurch die Wirbelsäule wirksam entlastet wird. Auch haben ergonomische Untersuchungen festgestellt, dass der schräge Frontstand bei den üblichen Tätigkeiten mit einem Flurförderzeug nicht so lange wie der Querstand eingenommen wird, sodass hier die bereichsweise Abstützung vollkommen ausreichend ist, um die Bedienperson zu entlasten. In einer bevorzugten Ausgestaltung erstreckt sich der Rückenabschnitt daher nicht über die gesamte Höhe, über die sich die Seitenwand erstreckt.

Ein bevorzugtes Ausführungsbeispiel der Erfindung wird nachfolgend anhand der Figuren erläutert. Es zeigen:
- Fig. 1a, b: das Antriebsteil eines Flurförderzeugs (ohne Hubteil) in zwei Ansichten auf die Standplattform,
- Fig. 2: eine Draufsicht auf die Fahrerstandplattform mit zwei angedeuteten Flächen für den Querstand und einer angedeuteten Fläche für den schrägen Frontstand,
- Fig. 3: ein Blick von oben auf eine schematisch eingezeichnete Bedienperson im Querstand und
- Fig. 4: eine Draufsicht auf eine Bedienperson im schrägen Frontstand.

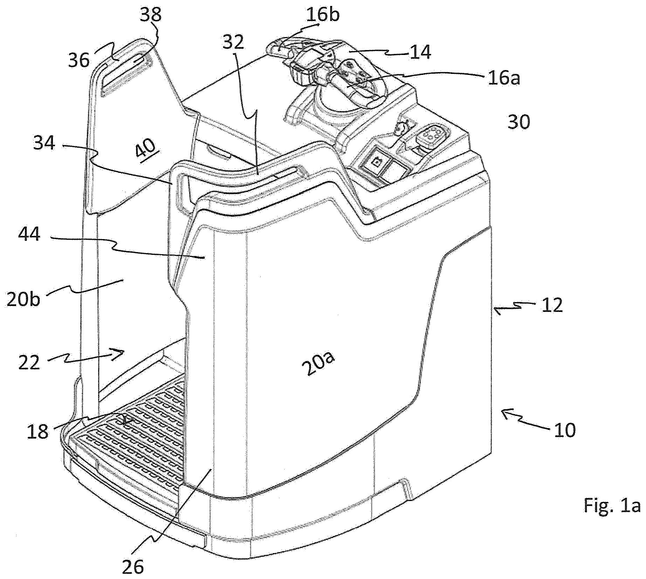

Figur 1a zeigt das Antriebsteil 10 für ein Flurförderzeug, ohne Hubteil. An Seite 12 schließt sich ein Hubteil, sei es ein Niederhubteil oder auch ein mehrschüssiges Hochhubteil an. Im Hinblick auf das Antriebsteil 10 ist das Fahrzeug vollkommen modular aufgebaut, sodass an sich bekannte Hubteile hier nicht näher dargestellt werden müssen. Das Antriebsteil 10 besitzt ein Bedienelement 14, das zwei zu ergreifende Handgriffe 16a, 16b besitzt. Das dargestellte Bedienelement 14 hat hier im Wesentlichen die Funktion eines Lenkrades und verschwenkt um eine Hochachse. Das Bedienelement 14 kann alternativ auch als eine Kurzdeichsel ausgebildet sein, bei der die Stellung des Deichselarms die Lenkrichtung bestimmt.

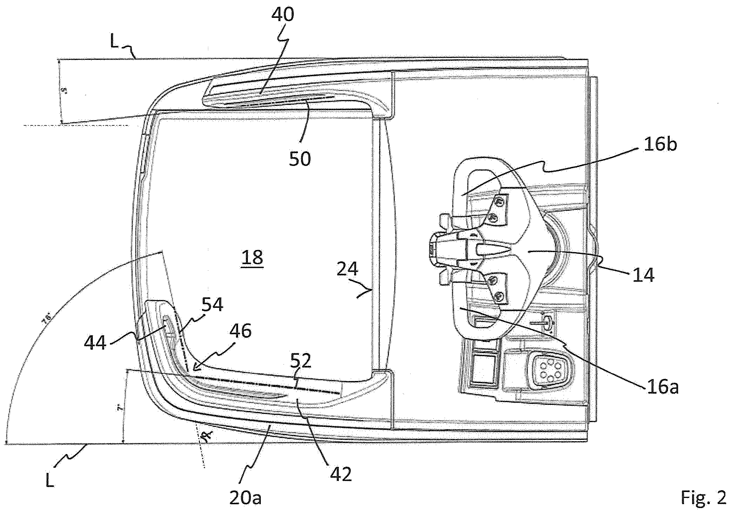

Das Antriebsteil 10 besitzt ferner eine Fahrerstandplattform 18, die seitlich von zwei Seitenwänden 20a und 20b begrenzt ist. Zwischen den Seitenwänden 20a und 20b befindet sich der Einstieg 22, durch den die Bedienperson die Fahrerstandplattform 18 erreicht. Auf der dritten Seite wird die Fahrerstandplattform 18 durch die Stirnwand 24 begrenzt. Die Stirnwand 24 (vgl. Fig. 2) bildet im Wesentlichen den Abschluss des Komponentenraums, der sich unter dem Bedienelement 14 befindet.

An der Seitenwand 20a angesetzt ist ein Rückenabschnitt 26. Der Rückenabschnitt 26 erstreckt sich in dem dargestellten Ausführungsbeispiel über die gesamte Höhe der Seitenwand 20a. Im oberen Bereich des Rückenabschnitts 26 ist ein vorstehendes Abstützmittel 44 vorgesehen. Das vorstehende Abstützmittel 44 ragt weiter in den Einstieg 22 hinein, als der Rückenabschnitt 26 im unteren Bereich an der Fahrerstandplattform. Das vorstehende Abstützmittel 44 und die Seitenwand 20a sind mit einem gemeinsamen Griffelement 30 versehen. Das Griffelement 30 besitzt einen horizontal angeordneten Handgriff 32 und einen vertikal im Bereich des Einstiegs angeordneten Handgriff 34. Beide Handgriffe 34 und 32 sind durch einen durchgehenden Freiraum, der ein Umgreifen der Handgriffe erlaubt, miteinander verbunden. Die Seitenwand 20b besitzt einen in Längsrichtung verlaufenden Handgriff 36, mit dem die Seitenwand 20b abschließt. Unterhalb des Handgriffs 36 ist eine Durchbrechung 38, die ein Ergreifen des Handgriffs 36 auch mit Handschuhen erlaubt. Unterhalb der Durchbrechung 38 ist ein Abstützmittel 40 vorgesehen, das einem Abstützbereich entsprechenden Querstand dient.

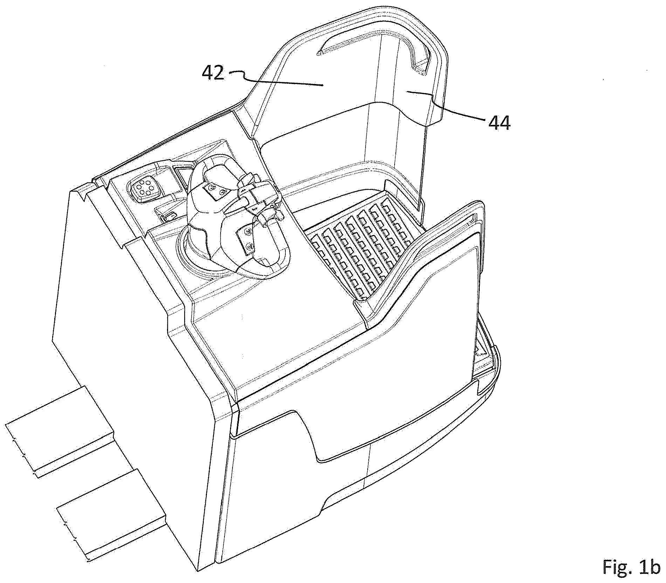

Figur 1b zeigt den Abstützabschnitt 44 an dem Rückenabschnitt und den Abstützabschnitt 42 an der Seitenwand 20a in einer räumlichen Ansicht auf die Fahrerstandplattform.

Figur 2 zeigt in einer Draufsicht die geometrischen Verhältnisse der Abstützmittel 40, 42 und 44. An der Seitenwand 20b ist für das Abstützmittel 40 eine Ebene 50 strichpunktiert eingezeichnet. Das Abstützmittel 40 unterstützt einen Querstand, der einen Winkel von 5° mit einer Fahrzeuglängsachse L einschließt. Die Fahrzeuglängsachse L ist hierbei seitlich am Fahrzeug an der Außenseite der Seitenwand 20b eingezeichnet. Grundsätzlich kann die Fahrzeuglängsachse L parallel verschoben werden und in einer beliebigen Position parallel oder in dem Fahrzeug verlaufen. Zu dem Abstützmittel 40 für ein Abstützen in einem ersten Querstand ist ein zweites Abstützmittel 42 an der Seitenwand 20a vorgesehen, dessen Ebene 52 ebenfalls einen Winkel von ungefähr 5° mit der Fahrzeuglängsachse L einschließt. In dem dargestellten Ausführungsbeispiel besitzen die Abstützmittel 40, 42 für den ersten und den zweiten Querstand den gleichen Winkel gegenüber der Fahrzeuglängsachse L. Dies ist jedoch keineswegs notwendig, vielmehr kann beispielsweise das Abstützmittel 42 an der Seitenwand 20a stärker geneigt sein, wodurch auch der schräge Frontstand durch den Rückenabschnitt 26 seine Position verändert. An dem Abstützmittel 44 ist eine Ebene 54 zur Abstützung des queren Frontstands eingezeichnet. Dort ist zu erkennen, dass diese Ebene 54 in dem dargestellten Ausführungsbeispiel einen stumpfen Winkel α mit der Fahrzeuglängsrichtung L einschließt.

In Figur 2 ist auch zu erkennen, dass ein Übergangsbereich 46 zwischen dem Abstützmittel 42 zur Abstützung des Querstandes und der Ebene 52 zur Abstützung des schrägen Frontstands abgerundet ineinander übergehen, ohne in diesem Bereich eine neues Abstützmittel zur Abstützung der Bedienperson in einer weiteren Position zu bilden.

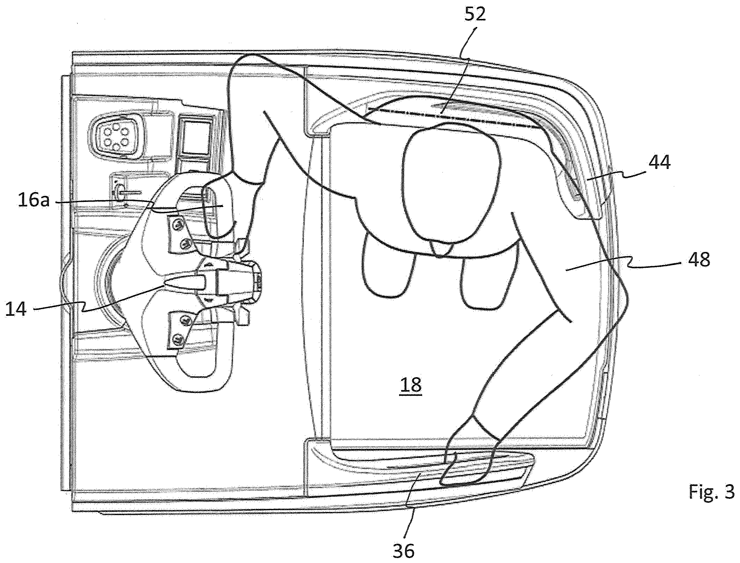

Figur 3 zeigt eine Phantomfigur 48, die auf der Fahrerstandplattform 18 steht und mit ihrer rechten Hand an den Handgriff 16a des Bedienelements 14 greift. Mit der anderen Hand (linke Hand) ergreift die Bedienperson 48 den Handgriff 36. Der Handgriff 16a des Bedienelements 14 und der Handgriff 36 der Seitenwand liegen hierbei ungefähr auf gleicher Höhe, sodass die Bedienperson in ihren Schultern eine entspannte Stellung einnehmen kann. Abgestützt wird die Bedienperson 48 durch das Abstützmittel 42, dessen Ebene 52 strichpunktiert dargestellt ist. Die Ebene 52 liegt im Rücken an und stützt die Person im Rücken dorsal ab. Das zweite Abstützmittel 44 übernimmt in dieser Stellung keine abstützende Funktion, sondern ist allenfalls zur Begrenzung einer seitlichen Bewegung der Bedienperson 48 vorgesehen.

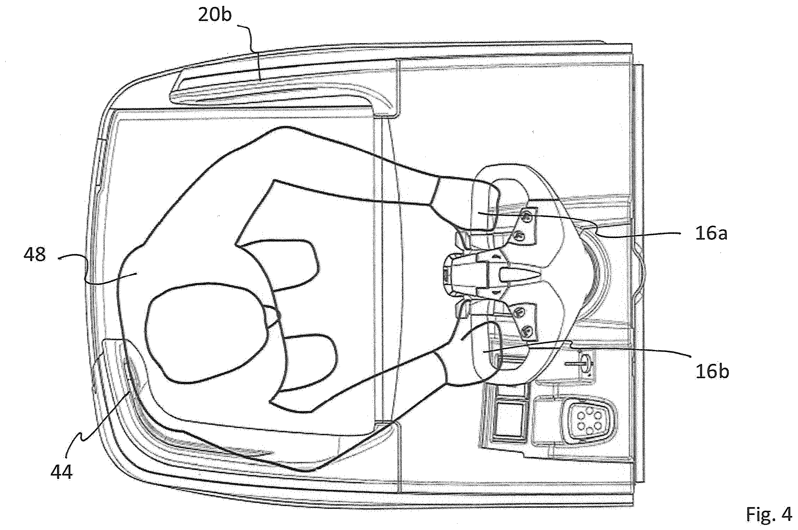

Figur 4 zeigt die Bedienperson 48 in ihrem schrägen Frontstand. Im schrägen Frontstand stützt sich die Bedienperson an dem Abstützmittel 44 des Rückenabschnitts 26 ab. In dem schrägen Frontstand kann die Bedienperson 48 ohne starkes Strecken der Arme die Griffe 16a und 16b ergreifen. Ein wichtiger Aspekt der Erfindung ist, dass bei dem Querstand ein Abstützen der Bedienperson über die gesamte Körperbreite sehr wünschenswert ist. Für den schrägen Frontstand ist hingegen ein Rückenabschnitt, der sich ungefähr über die halbe Breite des Rückens erstreckt, vollkommen ausreichend, um eine ausreichend bequeme Abstützung zu erzielen.

### Bezugszeichenliste

- 10: Antrieb steil
- 12: Seite
- 14: Bedienelement
- 16a, b: Handgriffe
- 18: Fahrerstandplattform
- 20a, b: Seitenwände
- 22: Einstieg
- 24: Stirnseite
- 26: Rückenabschnitt
- 30: Griffelement
- 32: Handgriff
- 34: Handgriff
- 36: Handgriff
- 38: Durchbrechung
- 40: Abstützmittel
- 42: Abstützmittel
- 44: Abstützmittel
- 46: Übergangsbereich
- 48: Bedienperson
- 50: Ebene
- 52: Ebene
- 54: Ebene

## Patentansprüche

1. Flurförderzeug mit einer Fahrerstandplattform (18), die seitlich von mindestens zwei einen Einstieg bildenden Seitenwänden (20a, 20b) begrenzt ist, wobei eine Bedieneinheit (14) an einer dem Einstieg (22) gegenüberliegenden Seite (12) angebracht und für eine Bedienung durch eine auf der Fahrerstandplattform (18) stehende Person (48) ausgerichtet ist, wobei für einen Querstand der Person eine der mindestens zwei Seitenwände (20a, 20b) ein Abstützmittel (42) bereitstellt, wobei ein Rückenabschnitt (26) an einer der mindestens zwei Seitenwände (20a, 20b) vorgesehen ist, der in den Einstieg (22) hineinreicht, **dadurch gekennzeichnet, dass** der Rückenabschnitt (26) ein weiteres Abstützmittel (44) für einen schrägen Frontstand bereitstellt, das einen Winkel mit dem Abstützmittel (42) der Seitenwand derart einschließt, dass der schräge Front- und der Querstand eigene Abstützpositionen bilden, wobei dem weiteren Abstützmittel (44) des Rückenabschnitts (26) und dem Abstützmittel (42) der Seitenwand (20a) jeweils eine Ebene (54, 52) zugeordnet ist, die im Wesentlichen einer Frontalebene einer an dem Abstützmittel (44, 42) sich abstützenden Person entspricht.

2. Flurförderzeug nach Anspruch 1, **dadurch gekennzeichnet, dass** das Abstützmittel (42) für den Querstand jeweils einen spitzen Winkel mit einer Fahrzeuglängsachse (L) einschließt.

3. Flurförderzeug nach Anspruch 2, **dadurch gekennzeichnet, dass** der spitze Winkel höchstens 20° und bevorzugt höchstens 12° beträgt.

4. Flurförderzeug nach Anspruch 2 oder 3, **dadurch gekennzeichnet, dass** beide Seitenwände (20a, 20b) Abstützmittel (42, 44, 40) für einen Querstand besitzen, wobei der Abstand zwischen den Ebenen der Abstützmittel (40, 42) sich von dem Einstieg (22) hin zu der Bedieneinheit (14) vergrößert.

5. Flurförderzeug nach einem der Ansprüche 1 bis 4, **dadurch gekennzeichnet, dass** das Abstützmittel (44) für den schrägen Frontstand eine Ebene (54) aufweist, die einen spitzen Winkel mit der zugehörigen Ebene der Abstützmittel (40, 42) der Seitenwand einschließt.

6. Flurförderzeug nach einem der Ansprüche 1 bis 5, **dadurch gekennzeichnet, dass** das Abstützmittel (44) für den schrägen Frontstand eine Ebene (54) aufweist, die einen stumpfen Winkel mit der zugehörigen Ebene (52) des Abstützmittels (42) der Seitenwand (20a) einschließt.

7. Flurförderzeug nach einem der Ansprüche 1 bis 6, **dadurch gekennzeichnet, dass** die Ebene (54) des Abstützmittels (44) für den schrägen Frontstand mit der zugehörigen Ebene des Abstützmittels (42) der Seitenwand (20a) einen Winkel aus einem Winkelbereich von 70° bis 110° und bevorzugt aus einem Winkelbereich von 80° bis 100° einschließt.

8. Flurförderzeug nach einem der Ansprüche 1 bis 7, **dadurch gekennzeichnet, dass** an mindestens einer der Seitenwände (20a, 20b) ein Handgriff (32, 34, 36) angebracht ist.

9. Flurförderzeug nach einem der Ansprüche 1 bis 9, **dadurch gekennzeichnet, dass** eine Fläche des Abstützmittels (44) für den schrägen Frontstand kleiner als eine Fläche des Abstützmittels (42) für den Querstand ist, aber ausreichend groß, um eine durchschnittlich große Bedienperson im schrägen Frontstand in seinem Rückenbereich abzustützen.

10. Flurförderzeug nach einem der Ansprüche 1 bis 8, **dadurch gekennzeichnet, dass** der Rückenabschnitt (26) sich bezogen auf die Höhe nicht über die gesamte Seitenwand (20a) erstreckt.

11. Flurförderzeug nach Anspruch 9, **dadurch gekennzeichnet, dass** die mit dem Rückenabschnitt (26) versehene Seitenwand (20a) einen oberen Rand und der Rückenabschnitt (26) ebenfalls einen oberen Rand aufweist, die bündig in einander übergehen.

## Claims

1. An industrial truck with a driver's cab (18), which is delimited laterally by at least two side walls (20a, 20b) forming an entrance, wherein an operating unit (14) is attached to a side (12) opposite the entrance (22) and is configured for operation by a person (48) standing on the driver's cab (18), wherein one of the at least two side walls (20a, 20b) provides a support means (42) for a person standing sideways, wherein a back portion (26) which reaches into the entrance (22) is provided on one of the at least two side walls (20a, 20b), **characterized in that** the back portion (26) provides a further support means (44) for standing diagonally frontwards, which forms an angle with the support means (42) of the side wall such that the diagonally frontwards position and the sideways standing position form separate support positions, wherein the further support means (44) of the back portion (26) and the support means (42) of the side wall (20a) is each associated with a plane (54, 52) which basically corresponds to a frontal plane of a person supporting themselves on the support means (44, 42).

2. The industrial truck according to claim 1, **characterized in that** the support means (42) for standing sideways each forms an acute angle with a vehicle longitudinal axis (L).

3. The industrial truck according to claim 2, **characterized in that** the acute angle is at most 20° and preferably at most 12°.

4. The industrial truck according to claim 2 or 3, **characterized in that** both side walls (20a, 20b) possess support means (42, 44, 40) for standing sideways, wherein the distance between the planes of the support means (40, 42) increases from the entrance (22) towards the operating unit (14).

5. The industrial truck according to one of claims 1 to 4, **characterized in that** the support means (44) for standing diagonally frontwards has a plane (54) which forms an acute angle with the associated plane of the support means (40, 42) of the side wall.

6. The industrial truck according to one of claims 1 to 5, **characterized in that** the support means (44) for standing diagonally frontwards has a plane (54) which forms an obtuse angle with the associated plane (52) of the support means (42) of the side wall (20a).

7. The industrial truck according to one of claims 1 to 6, **characterized in that** the plane (54) of the support means (44) for standing diagonally frontwards forms an angle with the associated plane of the support means (42) of the side wall (20a) from an angular range of 70° to 110° and preferably from an angular range of 80° to 100°.

8. The industrial truck according to one of claims 1 to 7, **characterized in that** a handle (32, 34, 36) is attached to at least one of the side walls (20a, 20b).

9. The industrial truck according to one of claims 1 to 9, **characterized in that** a face of the support means (44) for standing diagonally frontwards is smaller than a face of the support means (42) for standing sideways but is sufficiently large to support an average-sized operating person standing diagonally frontwards in their back region.

10. The industrial truck according to one of claims 1 to 8, **characterized in that** the back portion (26) does not extend over the entire side wall (20a) with regard to the height.

11. The industrial truck according to claim 9, **characterized in that** the side wall (20a) provided with the back portion (26) has an upper edge and the back portion (26) also has an upper edge which transition into each other flush.

## Revendications

1. Chariot de manutention doté d'une plateforme porteuse de conducteur (18), laquelle est délimitée latéralement par au moins deux parois latérales (20a, 20b) formant un accès, dans lequel une unité de commande (14) est fixée sur un côté (12) opposé à l'accès (22) et conçue pour une commande par une personne (48) se tenant debout sur la plateforme porteuse de conducteur (18), dans lequel, pour une position transversale de la personne, l'une des au moins deux parois latérales (20a, 20b) fournit un moyen d'appui (42), dans lequel il est prévu une section dorsale (26) sur l'une des au moins deux parois latérales (20a, 20b), laquelle s'étend dans l'accès (22), **caractérisé en ce que** la section dorsale (26) fournit un moyen d'appui supplémentaire (44) pour une position frontale inclinée, lequel forme un angle avec le moyen d'appui (42) de la parois latérale de telle façon que la position frontale inclinée et la position transversale forment des positions d'appui propres, dans lequel un plan (54, 52) est respectivement attribué au moyen d'appui supplémentaire (44) de la section dorsale (26) et au moyen d'appui (42) de la paroi latérale (20a), lequel correspond essentiellement à un plan frontal d'une personne s'appuyant sur le moyen d'appui (44, 42).

2. Chariot de manutention selon la revendication 1, **caractérisé en ce que** le moyen d'appui (42) destiné à la position transversale forme respectivement un angle aigu par rapport à un axe longitudinal de véhicule (L).

3. Chariot de manutention selon la revendication 2, **caractérisé en ce que** l'angle aigu mesure au maximum 20° et de préférence au maximum 12°.

4. Chariot de manutention selon la revendication 2 ou 3, **caractérisé en ce que** les deux parois latérales (20a, 20b) possèdent des moyens d'appui (42, 44, 40) pour une position transversale, dans lequel l'écart entre les plans des moyens d'appui (40, 42) augmente de l'accès (22) vers l'unité de commande (14).

5. Chariot de manutention selon l'une des revendications 1 à 4, **caractérisé en ce que** le moyen d'appui (44) destiné à la position frontale inclinée présente un plan (54) formant un angle aigu par rapport au plan correspondant des moyens d'appui (40, 42) de la paroi latérale.

6. Chariot de manutention selon l'une des revendications 1 à 5, **caractérisé en ce que** le moyen d'appui (44) destiné à la position frontale inclinée présente un plan (54) formant un angle obtus par rapport au plan correspondant (52) du moyen d'appui (42) de la paroi latérale (20a).

7. Chariot de manutention selon l'une des revendications 1 à 6, **caractérisé en ce que** le plan (54) du moyen d'appui (44) destiné à la position frontale inclinée forme un angle dans une plage angulaire de 70° à 110° et de préférence dans une plage angulaire de 80° à 100° par rapport au plan correspondant du moyen d'appui (42) de la paroi latérale (20a).

8. Chariot de manutention selon l'une des revendications 1 à 7, **caractérisé en ce qu'**une poignée (32, 34, 36) est fixée sur l'une au moins des parois latérales (20a, 20b).

9. Chariot de manutention selon l'une des revendications 1 à 9, **caractérisé en ce qu'**une surface du moyen d'appui (44) destiné à la position frontale inclinée est plus petite qu'une surface du moyen d'appui (42) destiné à la position transversale, mais suffisamment grande pour l'appui d'un opérateur de taille moyenne dans sa région dorsale dans la position frontale inclinée.

10. Chariot de manutention selon l'une des revendications 1 à 8, **caractérisé en ce que** la section dorsale (26) ne s'étend pas sur toute la paroi latérale (20a) par rapport à la hauteur.

11. Chariot de manutention selon la revendication 9, **caractérisé en ce que** la paroi latérale (20a) pourvue de la section dorsale (26) présente un bord supérieur et la section dorsale (26) présente également un bord supérieur, lesquels se prolongent l'un l'autre en affleurement.
